# EUROPÄISCHE PATENTANMELDUNG

(11) **EP 4 779 163 A1**
(43) Veröffentlichungstag der Anmeldung: **22.07.2026**
(21) Anmeldenummer: 25152631.5
(22) Anmeldetag: 17.01.2025
(51) Int. Cl.: F16B 21/18

(54) **DREHZAHLFESTE RINGE**

(71) Anmelder: Seeger-Orbis GmbH, 61462 Königstein (DE)
(72) Erfinder: STEIGER, Jan, 55270 Essenheim (DE); HOELKE, Stephan, 61118 Bad Vilbel (DE)
(74) Vertreter: Hoffmann Eitle

(57) **Zusammenfassung**

Die Erfindung betrifft einen Sprengring (2) zur Sicherung eines Bauteils (4) auf einer Welle (6), wobei der Sprengring (2) eine Sicherungsfläche (8) für den Kontakt des Sprengrings (2) mit dem Bauteil (4) umfasst, wobei die Sicherungsfläche (8) zumindest teilweise in einem Winkel größer als 0° zur radialen Richtung (R) des Sprengrings (2) verläuft.

## Beschreibung

### GEBIET DER ERFINDUNG

Die Erfindung betrifft einen Sprengring zur Sicherung eines Bauteils auf einer Welle, ein System zur Sicherung eines Bauteils auf einer Welle und ein Verfahren zur Sicherung eines Bauteils auf einer Welle.

### STAND DER TECHNIK

Sprengringe zur Sicherung eines Bauteils auf einer Welle werden dazu genutzt Bauteile auf einer rotierenden Welle zu sichern. Um ein Bauteil auf der Welle zu sichern, wird der Sprengring in einer Nut der Welle vor dem Bauteil angeordnet. Dabei liegt eine Seite des Bauteils an einer Fläche des Sprengrings an. Zudem ist der Innendurchmesser des Sprengrings kleiner als der Durchmesser der Welle, sodass der Sprengring fest in der Nut und damit das Bauteil fest auf der Welle sitzt. Auf diese Weise ist das Bauteil auch bei Rotation der Welle auf der Welle gesichert. Der Vorteil des Sprengrings ist es, dass der Sprengring für eine Demontage des Bauteil wieder von der Welle abgenommen werden kann.

Mit zunehmender Drehzahl der Welle und damit auch des Sprengrings wirken Fliehkräfte auf den Sprengring. Hierbei kommt es bei hohen Drehzahlen zu einem Aufbiegen des Sprengrings, sodass der Durchmesser des Sprengrings größer wird. Dadurch sitzt der Sprengring nicht mehr fest in der Nut und löst sich von der Welle ab. Folglich ist auch das Bauteil nicht mehr gesichert. Mithin weisen Sprengringe häufig nur eine geringe Drehzahlfestigkeit auf, sodass eine Sicherung des Bauteils nur bis zu einer niedrigen Drehzahl gewährleistet ist.

Ferner besteht häufig Spiel zwischen dem Sprengring und dem Bauteil. Somit kann das Bauteil in axiale Richtung auf der Welle wandern. Zum einen führt dies zu Unwuchten bei hohen Drehzahlen. Zum anderen kann das wandernde Bauteile umliegende Teile wie beispielsweise den Sprengring schädigen.

Ausgehend von diesem Stand der Technik ist es die Aufgabe der vorliegenden Erfindung, einen kostengünstigen Sprengring vorzuschlagen, der eine einfache Handhabung für die Montage und Demontage des Sprengrings und eine gleichzeitig gute Sicherung bei hohen Drehzahlen mit wenig Spiel gewährleistet.

### ZUSAMMENFASSUNG DER ERFINDUNG

Die oben genannte Aufgabe wird gemäß einem ersten Aspekt der Erfindung durch einen Sprengring zur Sicherung eines Bauteils auf einer Welle gelöst, wobei der Sprengring eine Sicherungsfläche für den Kontakt des Sprengrings mit dem Bauteil umfasst, wobei die Sicherungsfläche zumindest teilweise in einem Winkel größer als 0° zur radialen Richtung des Sprengrings verläuft.

Auf diese Weise ist der Sprengring einfach und kostengünstig herstellbar. Zudem sichert der Sprengring ein Bauteil sehr gut in axiale Richtung ab. Ferner passt sich der Sprengring besonders gut an jede Form eines Bauteils an, da die Sicherungsfläche in einem Winkel größer als 0° zur radialen Richtung des Sprengrings verläuft und somit dem Bauteil eine besonders große Sicherungsfläche mit vielen möglichen Kontaktpunkten anbietet. Des Weiteren befindet sich die Sicherungsfläche aufgrund des Winkels größer als 0° zumindest teilweise unter dem Bauteil. Somit löst sich der Sprengring auch bei hohen Drehzahlen nicht aus der Nut, sondern wird gegen das Bauteil gedrückt. Somit kann der Sprengring auch bei besonders hohen Drehzahlen das Bauteil gut sichern. Ferner kann sich der Sprengring durch die Sicherungsfläche an das Bauteil anpassen, da die Sicherungsfläche zumindest teilweise in einem Winkel größer als 0° zur radialen Richtung des Sprengrings verläuft. Mithin kann das Bauteil an verschiedenen Bereichen der Sicherungsfläche anliegen, sodass das Bauteil wenig Spiel hat. Außerdem ist der Sprengring einfach zu montieren und zu demontieren.

Der Sprengring kann aus einem Stahl, insbesondere einem Federstahl oder Edelmetall, sein. Beispielsweise kann der Sprengring Löcher für ein Greifwerkzeug aufweisen. Der Sprengring kann insbesondere ein Sicherungsring sein. Der Sicherungsring kann beispielsweise Laschen mit Öffnungen aufweisen.

Der Sprengring kann eine Innenseite aufweisen. Die Innenseite kann dem Zentrum des Sprengrings zugewandt sein. An der Innenseite kann der Sprengring eine Innenfläche aufweisen. Beispielsweise kann die Innenfläche glatt sein. Beispielsweise kann die Innenfläche kein Gewinde aufweisen. Der Sprengring kann eine Außenseite aufweisen. Die Außenseite kann von dem Zentrum des Sprengrings abgewandt sein. Der Abstand der Innenseite zur Außenseite kann die Breite des Sprengrings sein.

Der Sprengring kann eine radiale Richtung aufweisen. Beispielsweise kann sich die radiale Richtung vom Zentrum des Sprengrings zur Außenseite des Sprengrings erstrecken. Beispielsweise kann sich die radiale Richtung vom Zentrum zu der Außenseite erstrecken. Der Außenradius des Sprengrings kann die Distanz vom Zentrum entlang der radialen Richtung zur Außenseite sein. Der Außendurchmesser kann die Distanz von einer Außenseite durch das Zentrum zur gegenüberliegenden Außenseite sein. Der Außendurchmesser des Sprengrings kann veränderlich sein. Die radiale Richtung kann in der Richtung des Radius des Sprengrings verlaufen. Die radiale Richtung kann vom Zentrum des Sprengrings strahlenförmig ausgehend sein. Der Sprengring kann in einem Querschnitt entlang der radialen Richtung einen trapezförmigen oder fünfeckigen Querschnitt aufweisen.

Der Sprengring kann eine axiale Richtung aufweisen. Die axiale Richtung kann senkrecht zur radialen Richtung sein. Die axiale Richtung kann entlang der Rotationsachse des Sprengrings verlaufen. Die axiale Erstreckung des Sprengrings in axiale Richtung kann die Dicke des Sprengrings sein. Die Dicke kann kleiner als der Außendurchmesser sein. Die Dicke kann maximal 20% des Außendurchmesser entsprechen.

Der Sprengring kann zur Sicherung des Bauteils auf der Welle ausgebildet sein. Somit kann der Sprengring beispielsweise auch bei hohen Drehzahlen ein Lösen des Bauteils von der Welle verhindern. Die Sicherung des Bauteils auf der Welle kann insbesondere in axiale Richtung sein.

Der Sprengring kann eine Lücke aufweisen. Die Lücke kann eine räumliche Erstreckung aufweisen. Die Lücke kann zwischen zwei gegenüberliegenden Enden des Sprengrings sein. Beispielsweise kann die Lücke materialfrei sein. Zum Beispiel kann in der Lücke kein Festkörper, beispielweise Metall, sein. Zum Beispiel kann sich in der Lücke nur Luft befinden.

Der Sprengring kann sich über einen Winkel von weniger als 360° erstrecken. Der Sprengring kann ein offener Kreis sein. Beispielsweise kann der Sprengring bis auf die ihn unterbrechende Lücke ringförmig ausgeführt sein. Der Sprengring kann nur eine Windung mit einer Lücke aufweisen. Über oder unter dem Sprengring kann sich kein weiteres mit dem Sprengring verbundenes Material befinden.

Die Sicherungsfläche kann eine Fläche sein, die in Kontakt mit dem Bauteil kommen soll. Die Sicherungsfläche kann eine räumliche Erstreckung aufweisen.

Der Kontakt des Sprengrings mit dem Bauteil kann eine Verbindung zwischen der Sicherungsfläche und dem Bauteil sein. Der Kontakt des Sprengrings mit dem Bauteil kann ein Bereich sein, an dem die Sicherungsfläche an dem Bauteil anliegt. Der Kontakt des Sprengrings mit dem Bauteil kann eine direkte Verbindung zwischen der Sicherungsfläche und dem Bauteil sein. Beispielsweise kann kein weiteres Material zwischen dem Bauteil und der Sicherungsfläche sein. Beispielsweise kann der Sprengring beim Kontakt mit dem Bauteil eine formschlüssige Verbindung mit dem Bauteil aufweisen. Beispielsweise kann die formschlüssige Verbindung das Bauteil in axiale Richtung und/oder in radiale Richtung sicheren.

Die Sicherungsfläche verläuft zumindest teilweise in einem Winkel größer als 0° zur radialen Richtung des Sprengrings. Die radiale Richtung kann parallel zu den Oberflächen verlaufen, die den Sprengring in axiale Richtung begrenzen. Insbesondere kann die Sicherungsfläche zumindest teilweise in einem Winkel größer als 0°, bevorzugt größer als 2°, besonders bevorzugt größer als 5°, zur radialen Richtung des Sprengrings verlaufen. Die Sicherungsfläche verläuft zumindest teilweise in einem Winkel größer als 0°, bevorzugt größer als 2°, besonders bevorzugt größer als 5°, zur radialen Richtung des Sprengrings, kann alternativ bedeuten, dass die Sicherungsfläche zumindest teilweise in einem Winkel kleiner als 90°, bevorzugt kleiner als 88°, besonders bevorzugt kleiner als 85°, zur axialen Richtung des Sprengrings verläuft.

Die Sicherungsfläche kann eine Begrenzung des Sprengrings in axiale Richtung sein. Die Sicherungsfläche kann mit einer in radiale Richtung verlaufenden Oberfläche des Sprengrings verbunden sein.

Wenn die Sicherungsfläche zumindest teilweise in einem Winkel größer als 0° zur radialen Richtung des Sprengrings verläuft, kann der Querschnitt des Sprengrings in radiale Richtung trapezförmig sein. Insbesondere kann der Querschnitt des Sprengrings in radiale Richtung viereckig, fünfeckig oder sechseckig sein. Der Winkel kann bei einer ebenen Fläche durch das Verhältnis einer Gerade in der ebenen Fläche, die bevorzugt keinen Anteil in Umlaufrichtung aufweist, zur radialen Richtung bestimmt werden. Der Winkel kann bei einer gebogenen Fläche über das Verhältnis einer Tangente, die bevorzugt keinen Anteil in Umlaufrichtung aufweist, der gebogenen Fläche zur radialen Richtung bestimmt werden. Vorteilhafterweise kann der Winkel bei einer gebogenen Fläche über das Verhältnis einer Tangente, die bevorzugt keinen Anteil in Umlaufrichtung aufweist, der gebogenen Fläche am Mittelpunkt der gebogenen Fläche zur radialen Richtung bestimmt werden.

Gemäß einem Ausführungsbeispiel kann die Sicherungsfläche eben oder gebogen sein.

Wenn die Sicherungsfläche eben sein kann, kann der Sprengring besonders einfach hergestellt werden und besonders einfach zu handhaben sein. Wenn die Sicherungsfläche gebogen sein kann, kann der Sprengring das Bauteil besonders zuverlässig sichern.

Eben kann bedeuten, dass die Sicherungsfläche plan ist. Eben kann bedeuten, dass die Sicherungsfläche zweidimensional sein kann.

Gebogen kann bedeuten, dass die Sicherungsfläche dreidimensional sein kann.

Gemäß einem Ausführungsbeispiel kann die ebene Sicherungsfläche zumindest teilweise in einem Winkel kleiner gleich 20°, bevorzugt kleiner gleich 15°, bevorzugt kleiner gleich 10°, zur radialen Richtung des Sprengrings verlaufen.

Wenn die ebene Sicherungsfläche zumindest teilweise in einem Winkel kleiner gleich 20°, bevorzugt kleiner gleich 15°, bevorzugt kleiner gleich 10°, zur radialen Richtung des Sprengrings verlaufen kann, kann der Sprengring ein Bauteil besonders gut und ohne Spiel sichern. Zudem kann der Sprengring besonders einfach herzustellen sein.

Gemäß einem Ausführungsbeispiel kann sich die Sicherungsfläche über maximal 80%, bevorzugt über maximal 60%, besonders bevorzugt über maximal 50%, der Breite des Sprengrings erstrecken.

Auf diese Weise kann der Sprengring gut in der Nut sitzen und gleichzeitig, das Bauteil sehr gut sichern. Mithin kann der Sprengring besonders zuverlässig zum Sichern sein.

Gemäß einem Ausführungsbeispiel kann der Sprengring eine Außenfläche umfassen, wobei die Außenfläche in einem Winkel von maximal 10°, bevorzugt maximal 5°, besonders bevorzugt maximal 3°, zur axialen Richtung des Sprengrings verlaufen kann, wobei die Sicherungsfläche mit der Außenfläche verbunden sein kann.

Auf diese Weise kann der Sprengring mit einer gut greifbaren Außenfläche geschaffen werden. Dadurch können die Montage und Demontage des Sprengrings erleichtert werden. Ferner kann eine Beschädigung des Bauteils verhindert werden.

Die Außenfläche kann insbesondere in axiale Richtung verlaufen. Die Außenfläche kann die äußerste Begrenzung des Sprengrings in radiale Richtung sein. Die Außenfläche kann eben sein. Die Außenfläche kann an der Außenseite des Sprengrings angeordnet sein. Die Außenfläche kann glatt sein. Beispielsweise kann die Außenfläche kein Gewinde aufweisen.

In einem Ausführungsbeispiel kann die Außenfläche eine Rundung bilden.

Gemäß einem Ausführungsbeispiel kann der Sprengring eine Kontaktfläche umfassen, wobei die Kontaktfläche der Sicherungsfläche in axiale Richtung gegenüberliegend angeordnet sein kann,
a) wobei insbesondere die Kontaktfläche einen größeren Winkel zur radialen Richtung des Sprengrings aufweisen kann als die Sicherungsfläche, oder
b) wobei insbesondere die Kontaktfläche denselben Winkel zur radialen Richtung des Sprengrings aufweisen kann wie die Sicherungsfläche.

Wenn der Sprengring die Kontaktfläche umfassen kann, kann die Montage des Sprengrings erleichtert werden, da der Sprengring in beiden Richtungen eingesetzt werden kann. Zudem kann die Herstellung kostengünstiger sein.

Wenn die Kontaktfläche einen größeren Winkel zur radialen Richtung des Sprengrings aufweisen kann als die Sicherungsfläche, kann die Kontaktfläche zum Aufbringen des Bauteils genutzt werden. Hierzu kann durch die Kontaktfläche das Bauteil beim Aufschieben auf die Welle, eine radiale Kraft auf die Kontaktfläche aufbringen, sodass der Sprengring in die Nut gepresst werden kann. Mithin können Hilfsmittel zu Montage vermieden werden, sodass die Montage erleichtert sein kann.

Die Kontaktfläche kann insbesondere zum Gleiten für das Bauteil über den Sprengring ausgebildet sein. Beispielsweise kann die Kontaktfläche einen Winkel von 30° bis 60°, bevorzugt von 40° bis 50°, zur radialen Richtung aufweisen.

Wenn die Kontaktfläche denselben Winkel zur radialen Richtung des Sprengrings aufweisen kann wie die Sicherungsfläche, kann die Montage dadurch erleichtert werden, sodass die Orientierung des Sprengrings für die Montage unerheblich sein kann. Beispielsweise kann die Kontaktfläche ebenfalls zum Sichern des Bauteils geeignet sein. Beispielsweise kann die Kontaktfläche dieselbe Funktion wie die Sicherungsfläche erfüllen.

Die Kontaktfläche kann eine räumliche Erstreckung aufweisen. Die Kontaktfläche kann eben oder gebogen sein. Eben kann bedeuten, dass die Kontaktfläche plan ist. Eben kann bedeuten, dass die Kontaktfläche zweidimensional sein kann. Gebogen, insbesondere konkav, kann bedeuten, dass die Kontaktfläche dreidimensional sein kann. Konkav kann nach innen gewölbt bedeuten.

Gemäß einem Ausführungsbeispiel kann die ebene Kontaktfläche zumindest teilweise in einem Winkel kleiner gleich 20°, bevorzugt kleiner gleich 15°, bevorzugt kleiner gleich 10°, zur radialen Richtung des Sprengrings verlaufen.

Beispielsweise kann die Kontaktfläche einen ebenen Teil und einen gebogenen, insbesondere konvexen, Teil aufweisen. Insbesondere kann der ebene Teil der Kontaktfläche in axiale Richtung näher zu der Sicherungsfläche angeordnet sein als der gebogene Teil. Auf diese Weise kann ein Bauteil besonders einfach über den Sprengring gleiten, sodass die Montage besonders einfach sein kann.

Die Kontaktfläche kann sich über maximal 80%, bevorzugt über maximal 60%, Besonders bevorzugt über maximal 50%, der Breite des Sprengrings erstrecken. Die Kontaktfläche kann mit der Außenfläche verbunden sein. Die Sicherungsfläche und die Kontaktfläche können miteinander verbunden sein. Zum Beispiel kann die Sicherungsfläche an die Kontaktfläche angrenzen. Zum Beispiel kann ein Grenze der Sicherungsfläche an einer Grenze der Kontaktfläche anliegen.

Gemäß einem Ausführungsbeispiel kann der Sprengring eine radial verlaufende Fläche aufweisen, die der Sicherungsfläche in axiale Richtung gegenüberliegend angeordnet sein kann. Auf diese Weise kann der Aufbau des Sicherungsrings und damit die Herstellung besonders einfach sein.

Die oben genannte Aufgabe wird gemäß einem zweiten Aspekt der Erfindung durch ein System zur Sicherung eines Bauteils auf einer Welle gelöst, wobei das System ein Bauteil, eine Welle und einen erfindungsgemäßen Sprengring umfasst, wobei die Welle eine Nut umfasst, wobei der Sprengring in der Nut angeordnet ist, wobei das Bauteil eine Anlagefläche aufweist, wobei die Anlagefläche an der Sicherungsfläche angeordnet ist, sodass das Bauteil in axiale Richtung gesichert ist.

Auf diese Weise ist das System einfach und kostengünstig herstellbar. Zudem sichert der Sprengring das Bauteil sehr gut. Ferner passt sich der Sprengring besonders gut an jede Form des Bauteils an, da die Sicherungsfläche in einem Winkel größer als 0° zur radialen Richtung des Sprengrings verläuft und somit dem Bauteil eine besonders große Sicherungsfläche mit vielen möglichen Kontaktpunkten anbietet. Des Weiteren befindet sich die Sicherungsfläche aufgrund des Winkels größer als 0° zumindest teilweise unter dem Bauteil. Somit löst sich der Sprengring auch bei hohen Drehzahlen nicht aus der Nut, sondern wird gegen das Bauteil gedrückt. Somit sichert der Sprengring das Bauteil auch bei besonders hohen Drehzahlen gut. Ferner kann sich der Sprengring durch die Sicherungsfläche an das Bauteil anpassen, da die Sicherungsfläche zumindest teilweise in einem Winkel größer als 0° zur radialen Richtung des Sprengrings verläuft. Mithin kann das Bauteil an verschiedenen Bereichen der Sicherungsfläche anliegen, sodass das Bauteil wenig Spiel hat. Außerdem ist der Sprengring einfach zu montieren und zu demontieren.

Die Welle kann ein rotierendes, insbesondere längliches, Element sein. Die Welle kann einen kreisförmigen Querschnitten aufweisen. Die Welle kann zur Übertragung von Drehbewegungen und/oder Drehmomenten ausgebildet sein.

Das Bauteil kann beispielsweise ein Lager sein. Das Bauteil kann eine Öffnung aufweisen. Die Öffnung kann durch das gesamte Bauteil hindurchgehen. Die Öffnung kann einen größeren Querschnitt als die Welle aufweisen. Die Welle kann in der Öffnung angeordnet sein.

Die Nut kann eine Vertiefung zur teilweisen Aufnahme des Sprengrings sein.

Die Anlagefläche des Bauteils kann eine räumliche Erstreckung aufweisen.

Die Anlagefläche ist an der Sicherungsfläche angeordnet, sodass das Bauteil in axiale Richtung gesichert ist. Die Anlagefläche kann der Kontakt des Sprengrings mit dem Bauteil sein. Die Anlagefläche und die Sicherungsfläche können die einzige Verbindung zwischen dem Sprengring und dem Bauteil sein.

Die Sicherungsfläche kann an der Anlagefläche anliegen. Die Sicherungsfläche und die Anlagefläche können unmittelbar miteinander verbunden sein. Beispielsweise kann kein weiteres Material zwischen der Anlagefläche und der Sicherungsfläche sein. Beispielsweise kann die Sicherungsfläche mit der Anlagefläche eine formschlüssige Verbindung aufweisen, wobei die formschlüssige Verbindung das Bauteil in axiale Richtung und/oder in radiale Richtung sicheren kann.

Gemäß einem Ausführungsbeispiel kann der Durchmesser der Nut kleiner sein als der Innendurchmesser des Sprengrings im entspannten Zustand, und/oder wobei der Durchmesser der Welle größer als der Außendurchmesser des Sprengrings im verkleinerten Zustand sein kann.

Der Durchmesser der Nut kann der Abstand zweier sich dem Zentrum der Nut gegenüberliegenden Oberflächen der Nut sein. Das Zentrum der Nut kann auf der Achse der Welle liegen. Der Durchmesser der Nut kann die maximale Erstreckung der Nut in radiale Richtung sein. Beispielsweise kann der Durchmesser der Nut, insbesondere in Umlaufrichtung, konstant sein.

Der Durchmesser der Welle kann der Abstand zweier sich dem Zentrum der Welle gegenüberliegenden Oberflächen der Welle sein. Das Zentrum der Welle kann auf der Achse der Welle liegen. Der Durchmesser der Welle kann die maximale Erstreckung der Welle in radiale Richtung sein. Beispielsweise kann der Durchmesser der Welle, insbesondere in Umlaufrichtung, konstant sein.

Der Innendurchmesser des Sprengrings kann der Abstand zweier sich dem Zentrum des Sprengrings gegenüberliegenden Flächen auf der Innenseite des Sprengrings sein. Das Zentrum des Sprengrings kann auf der axialen Achse des Sprengrings liegen. Der Innendurchmesser des Sprengrings kann die maximale Erstreckung des Sprengrings innerhalb der Innenseite des Sprengrings in radiale Richtung sein. Beispielsweise kann der Innendurchmesser des Sprengrings, insbesondere in Umlaufrichtung, konstant sein.

Der Außendurchmesser des Sprengrings kann der Abstand zweier sich dem Zentrum des Sprengrings gegenüberliegenden Flächen auf der Außenseite des Sprengrings sein. Das Zentrum des Sprengrings kann auf der axialen Achse des Sprengrings liegen. Der Außendurchmesser des Sprengrings kann die maximale Erstreckung des Sprengrings innerhalb der Außenseiten des Sprengrings in radiale Richtung sein. Beispielsweise kann der Außendurchmesser des Sprengrings, insbesondere in Umlaufrichtung, konstant sein.

Im entspannten Zustand des Sprengrings kann keine Belastung auf den Sprengring wirken. Im verkleinerten Zustand kann eine Belastung auf den Sprengring wirken, sodass der Außendurchmesser des Sprengrings kleiner ist als im entspannten Zustand.

Gemäß einem Ausführungsbeispiel kann der Außendurchmesser des Sprengrings im montierten Zustand kleiner als der Außendurchmesser des Sprengrings im entspannten Zustand sein.

Auf diese Weise kann sichergestellt werden, dass der Sprengring gegen das Bauteil drücken kann im montierten Zustand. Somit kann die Kraft auf die Anlagefläche und die Sicherungsfläche verstärkt werden. Dadurch kann die Reibung zwischen der Anlagefläche und der Sicherungsfläche erhöht werden, sodass der Sprengring das Bauteil besser sichern kann. Dadurch kann zudem das Spiel des Bauteils reduziert sein.

Der montierte Zustand kann vorliegen, wenn der Sprengring in der Nut angeordnet sein kann und die Anlagefläche an der Sicherungsfläche angeordnet ist. Im montieren Zustand kann eine Rückstellkraft des Sprengrings den Außendurchmesser vergrößern wollen. Im montieren Zustand kann eine Gegenkraft vom Bauteil auf die Rückstellkraft des Sprengrings wirken.

Gemäß einem Ausführungsbeispiel kann die Tiefe der Nut größer sein als die Breite des Sprengrings.

Auf diese Weise kann der Sprengring für die Montage des Bauteils in der Nut versenkt werden. Mithin kann die Handhabung erleichtert sein.

Die Tiefe der Nut kann der radiale Abstand der Oberfläche der Nut zu der Oberfläche der Welle sein. Die Tiefe der Nut kann der radiale Abstand eines Punktes der Nut, der dem Zentrum der Welle am nächsten sein kann, zu einem Punkt der Welle, der dem Zentrum der Welle am nächsten sein kann, sein. Die Tiefe der Nut kann insbesondere konstant sein. Die Breite des Sprengrings kann insbesondere konstant sein.

Gemäß einem Ausführungsbeispiel kann die Anlagefläche als Gegenstück zur Sicherungsfläche ausgebildet sein, wobei insbesondere die Anlagefläche eben sein kann.

Auf diese Weise können die Anlagefläche und die Sicherungsfläche besonders gut aneinander anliegen, sodass der Sprengring das Bauteil mit besonders wenig Spiel auch bei hohen Drehzahlen zuverlässig sichern kann. Zudem können die Montage und Demontage des Systems besonders einfach sein.

Die Anlagefläche kann als Gegenstück zur Sicherungsfläche ausgebildet sein, wenn die Anlagefläche die Negativform der Sicherungsfläche darstellen kann. Beispielsweise kann die Anlagefläche das inverse Abbild der Sicherungsfläche sein. Beispielsweise kann die Anlagefläche das negative Abbild der Sicherungsfläche sein.

Gemäß einem Ausführungsbeispiel kann die Anlagefläche eine Ecke des Bauteils sein.

Auf diese Weise kann der Sprengring besonders einfach mit dem Bauteil verbunden werden, sodass die Montage und Demontage deutlich leichter sein können. Ferner kann der Sprengring das Bauteil an einer Ecke besonders gut bei hohen Drehzahlen in axiale und radiale Richtung sichern.

Die Ecke des Bauteils kann ein Bereich des Bauteils sein, an dem zwei Außenflächen in einem Winkel aufeinandertreffen. Die Ecke des Bauteils kann abgerundet sein. Das Bauteil und der Sprengring können nur an der Anlagefläche und der Sicherungsfläche Kontakt miteinander aufweisen.

Das Bauteil, insbesondere die Ecke des Bauteils, kann teilweise in radiale Richtung oberhalb der Nut angeordnet sein. Das Bauteil, insbesondere die Ecke des Bauteils, kann teilweise in radiale Richtung die Nut überlagern. Beispielsweise kann sich das Bauteil, insbesondere die Ecke des Bauteils, in axiale Richtung nur teilweise über die Nut erstrecken. Beispielsweise kann das Bauteil, insbesondere die Ecke des Bauteils, die Nut in radiale Richtung teilweise begrenzen. Beispielsweise kann der Sprengring teilweise zwischen dem Bauteil, insbesondere die Ecke des Bauteils, und der Welle angeordnet sein.

Gemäß einem Ausführungsbeispiel kann die Anlagefläche an der der Welle zugewandten Außenseite des Bauteils ausgebildet sein.

Auf diese Weise kann der Sprengring besonders gut in das Bauteil eingreifen, da der Sprengring zwischen dem Bauteil und der Welle angeordnet sein kann. Mithin kann der Sprengring sich nicht lösen, da ein Aufweiten des Sprengrings durch die Anlagefläche an der der Welle zugewandten Außenseite des Bauteils begrenzt wird. Daher kann der Sprengring das Bauteil unabhängig von der Drehzahl gut auf der Welle sichern.

Die der Welle zugewandte Außenseite des Bauteils kann die Innenseite des Bauteils sein. Die der Welle zugewandte Außenseite des Bauteils kann die Seite des Bauteils sind, die mit der Welle in Kontakt kommen kann. Die der Welle zugewandte Außenseite des Bauteils kann die nach radial innen zeigende Außenseite des Bauteils sein. Die der Welle zugewandte Außenseite des Bauteils kann die Oberfläche der Öffnung des Bauteils sein.

Beispielsweise kann das Bauteil in radiale Richtung vollständig über der Nut angeordnet sein. Beispielsweise kann das Bauteil in radiale Richtung die Nut vollständig überlagern. Beispielsweise kann sich das Bauteil in axiale Richtung vollständig über die gesamte Nut erstrecken. Beispielsweise kann das Bauteil die Nut in radiale Richtung vollständig begrenzen. Beispielsweise kann der Sprengring vollständig zwischen dem Bauteil und der Welle angeordnet sein.

Bevorzugt kann der Sprengring zwischen zwei in axiale Richtung gegenüberliegenden Außenseiten des Bauteils angeordnet wischen den zwei in axiale Richtung gegenüberliegenden Außenseiten des Bauteils angeordnet sein.

Gemäß einem Ausführungsbeispiel kann das Bauteil eine weitere Anlagefläche aufweisen, wobei die weitere Anlagefläche an der der Welle zugewandten Außenseite des Bauteils ausgebildet sein kann, wobei die Anlagefläche der weiteren Anlagefläche in axiale Richtung gegenüberliegend angeordnet sein kann, wobei die Kontaktfläche an der weiteren Anlagefläche anliegen kann.

Auf diese Weise kann der Sprengring in beide axiale Richtungen durch die Anlagefläche, die weitere Anlagefläche, die Sicherungsfläche und die Kontaktfläche gesichert sein. Mithin kann das Spiel des Bauteils auf der Welle besonders effizient reduziert werden, da das Bauteil sowohl durch die die Anlagefläche und die Sicherungsfläche sowie die weitere Anlagefläche und die Kontaktfläche gesichert sein kann.

Die weitere Anlagefläche des Bauteils kann eine räumliche Erstreckung aufweisen.

Die weitere Anlagefläche kann an der Kontaktfläche angeordnet sein, sodass das Bauteil in axiale Richtung gesichert sein kann. Die weitere Anlagefläche kann ein weiterer Kontakt des Sprengrings mit dem Bauteil sein. Die Anlagefläche und die Sicherungsfläche sowie die weitere Anlagefläche und die Kontaktfläche können die einzige Verbindung zwischen dem Sprengring und dem Bauteil sein.

Die Kontaktfläche kann an der weiteren Anlagefläche anliegen. Die Kontaktfläche und die weitere Anlagefläche können unmittelbar miteinander verbunden sein. Beispielsweise kann kein weiteres Material zwischen der weiteren Anlagefläche und der Kontaktfläche sein. Beispielsweise kann die Kontaktfläche mit der weiteren Anlagefläche eine formschlüssige Verbindung aufweisen, wobei die formschlüssige Verbindung das Bauteil in axiale Richtung und radiale Richtung sicheren kann.

Beispielsweise kann die weitere Anlagefläche als Gegenstück zur Kontaktfläche ausgebildet sein, wobei insbesondere die weitere Anlagefläche eben oder gebogen sein kann.

Auf diese Weise können die weitere Anlagefläche und die Kontaktfläche besonders gut aneinander anliegen, sodass der Sprengring das Bauteil mit besonders wenig Spiel auch bei hohen Drehzahlen sichern kann. Zudem kann die Montage des Systems besonders einfach sein.

Die weitere Anlagefläche kann als Gegenstück zur Kontaktfläche ausgebildet sein, wenn die weitere Anlagefläche die Negativform der Kontaktfläche darstellen kann. Beispielsweise kann die weitere Anlagefläche das inverse Abbild der Kontaktfläche sein. Beispielsweise kann die weitere Anlagefläche das negative Abbild der Kontaktfläche sein.

In einem Ausführungsbeispiel kann die weitere Anlagefläche an der der Welle zugewandten Außenseite des Bauteils ausgebildet sein.

Auf diese Weise kann der Sprengring besonders gut in das Bauteil eingreifen, da der Sprengring zwischen dem Bauteil und der Welle angeordnet sein kann. Mithin kann der Sprengring sich nicht lösen, da ein Aufweiten des Sprengrings durch die Anlagefläche an der der Welle zugewandten Außenseite des Bauteils begrenzt wird. Daher kann der Sprengring das Bauteil unabhängig von der Drehzahl besonders gut auf der Welle sichern.

Die oben genannte Aufgabe wird gemäß einem dritten Aspekt der Erfindung durch ein Verfahren zur Sicherung eines Bauteils auf einer Welle mit einem erfindungsgemäßen System gelöst,
- bei dem der Sprengring in der Nut angeordnet wird,
- bei dem der Außendurchmesser des Sprengrings durch eine Krafteinwirkung verkleinert wird, bis der Außendurchmesser des Sprengrings kleiner als der Durchmesser der Welle ist,
- bei dem das Bauteil auf der Welle angeordnet wird,
- bei dem das Bauteil zumindest teilweise oder vollständig über der Nut angeordnet wird,
- bei dem die Krafteinwirkung auf den Sprengring eingestellt wird,
- bei dem die Sicherungsfläche an der Anlagefläche angeordnet wird, um das Bauteil auf der Welle zu sichern.

Das erfindungsgemäße Verfahren ist besonders einfach und kostengünstig. Zudem sichert der Sprengring das Bauteil sehr gut ab. Ferner passt sich der Sprengring besonders gut an jede Form des Bauteils an, da die Sicherungsfläche in einem Winkel größer als 0° zur radialen Richtung des Sprengrings verläuft und somit dem Bauteil eine besonders große Sicherungsfläche mit vielen möglichen Kontaktpunkten anbietet. Des Weiteren befindet sich die Sicherungsfläche aufgrund des Winkels größer als 0° zumindest teilweise unter dem Bauteil. Somit löst sich der Sprengring auch bei hohen Drehzahlen nicht aus der Nut, sondern wird gegen das Bauteil gedrückt. Somit kann der Sprengring auch bei besonders hohen Drehzahlen das Bauteil gut sichern. Ferner kann sich der Sprengring durch die Sicherungsfläche an das Bauteil anpassen, da die Sicherungsfläche zumindest teilweise in einem Winkel größer als 0° zur radialen Richtung des Sprengrings verläuft. Mithin kann das Bauteil an verschiedenen Bereichen der Sicherungsfläche anliegen, sodass das Bauteil wenig Spiel hat. Außerdem ist der Sprengring einfach zu montieren und zu demontieren. Somit bietet das Verfahren den Vorteil, dass auf einfache und kostengünstige Weise eine gute Sicherung des Bauteils auf der Welle mit wenig Spiel und bei hohen Drehzahlen erreicht wird.

Der Außendurchmesser des Sprengrings wird durch eine Krafteinwirkung verkleinert, bis der Außendurchmesser des Sprengrings kleiner als der Außendurchmesser der Nut ist. Beispielsweise kann die Krafteinwirkung eine radiale Kraft auf den Sprengring sein. Beispielsweise kann die Krafteinwirkung eine Kraft auf den Sprengring sein, durch die die Enden des Sprengrings näher zueinander gedrückt werden können. Beispielsweise kann die Krafteinwirkung eine Kraft auf den Sprengring entgegen der Rückstellkraft des Sprengrings sein.

Das Bauteil wird zumindest teilweise oder vollständig über der Nut angeordnet. Beispielsweise kann das Bauteil in radiale Richtung vollständig über der Nut angeordnet sein. Beispielsweise kann das Bauteil in radiale Richtung die Nut vollständig überlagern. Beispielsweise kann sich das Bauteil in axiale Richtung vollständig über die gesamte Nut erstrecken. Beispielsweise kann das Bauteil die Nut vollständig in radiale Richtung begrenzen. Beispielsweise kann der Sprengring vollständig zwischen dem Bauteil und der Welle angeordnet sein. Das Bauteil kann teilweise in radiale Richtung oberhalb der Nut angeordnet sein. Das Bauteil kann teilweise in radiale Richtung die Nut überlagern. Beispielsweise kann sich das Bauteil in axiale Richtung nur teilweise über die Nut erstrecken. Beispielsweise kann das Bauteil die Nut in radiale Richtung teilweise begrenzen. Beispielsweise kann der Sprengring teilweise zwischen dem Bauteil und der Welle angeordnet sein.

Die Krafteinwirkung auf den Sprengring kann beispielweise eingestellt werden, indem eine radiale Kraft auf den Sprengring gelöst wird. Beispielsweise kann eine Kraft auf den Sprengring, durch die die Enden des Sprengrings näher zueinander gedrückt werden können, gelöst werden. Beispielsweise kann die Krafteinwirkung auf den Sprengring entgegen der Rückstellkraft des Sprengrings gelöst werden.

Gemäß einem Ausführungsbeispiel kann der Sprengring die Kontaktfläche umfassen, wobei die Kontaktfläche der Sicherungsfläche in axiale Richtung gegenüberliegend angeordnet sein kann, und wobei die Kontaktfläche einen größeren Winkel zur radialen Richtung des Sprengrings aufweisen kann als die Sicherungsfläche.

Bei dem Verfahren kann der Außendurchmesser des Sprengrings durch eine Krafteinwirkung verkleinert werden, bis der Außendurchmesser des Sprengrings kleiner als der Außendurchmesser der Nut ist. Beispielsweise kann die Kraft von dem Bauteil auf die Kontaktfläche übertragen werden. Beispielsweise kann das Bauteil über die Kontaktfläche geschoben werden. Beispielsweise kann der Außendurchmesser des Sprengrings durch eine Aufschieben des Bauteils auf die Welle verkleinert werden, bis der Außendurchmesser des Sprengrings kleiner als der Außendurchmesser der Nut sein kann. Vorteilhafterweise kann die Kontaktfläche einen größeren Winkel zur radialen Richtung des Sprengrings aufweisen als die Sicherungsfläche. Dadurch kann das Bauteil besonders gut über die Kontaktfläche gleiten, sodass das Verfahren erleichtert werden kann. Ferner kann auf weitere Werkzeuge verzichtet werden.

Gemäß einem Ausführungsbeispiel kann der Sprengring die Kontaktfläche umfassen, wobei die Kontaktfläche der Sicherungsfläche in axiale Richtung gegenüberliegend angeordnet sein kann, und wobei die Kontaktfläche denselben Winkel zur radialen Richtung des Sprengrings aufweisen kann wie die Sicherungsfläche.

Bei dem Verfahren kann der Sprengring hierbei unabhängig von der Orientierung angeordnet werden, sodass die Montage erleichtert werden kann.

Bei dem Verfahren kann die Anlagefläche die Ecke des Bauteils sein. Beispielsweise kann das Bauteil teilweise über der Nut angeordnet werden. Beispielsweise kann die Ecke des Bauteils teilweise über der Nut angeordnet werden. Auf diese Weise kann das Bauteil gut in axiale Richtung gesichert werden.

Bei dem Verfahren kann die Anlagefläche an der der Welle zugewandten Außenseite des Bauteils ausgebildet sein. Beispielsweise kann das Bauteil vollständig über der Nut angeordnet werden. Beispielsweise kann die der Welle zugewandten Außenseite des Bauteils vollständig über der Nut angeordnet werden. Beispielsweise kann die Anlagefläche an der der Welle zugewandten Außenseite vollständig über der Nut angeordnet werden. Auf diese Weise kann das Bauteil gut in axiale Richtung gesichert werden.

Bei dem Verfahren kann die Kontaktfläche an der weiteren Anlagefläche angeordnet werden. Die Kontaktfläche und die weitere Anlagefläche können unmittelbar miteinander verbunden werden. Beispielsweise kann kein weiteres Material zwischen der weiteren Anlagefläche und der Kontaktfläche sein. Beispielsweise kann die Kontaktfläche mit der weiteren Anlagefläche formschlüssig verbunden werden, wobei die formschlüssige Verbindung das Bauteil in axiale Richtung und/oder in radiale Richtung sichern kann.

In einem Ausführungsbeispiel kann die weitere Anlagefläche an der der Welle zugewandten Außenseite des Bauteils ausgebildet sein. Auf diese Weise kann der Sprengring besonders gut in das Bauteil eingreifen, da der Sprengring zwischen dem Bauteil und der Welle angeordnet sein kann. Mithin kann der Sprengring sich nicht lösen, da ein Aufweiten des Sprengrings durch die Anlagefläche an der der Welle zugewandten Außenseite des Bauteils begrenzt werden kann. Daher kann der Sprengring das Bauteil besonders gut sichern unabhängig von der Drehzahl der Welle.

Bevorzugt kann der Sprengring zwischen zwei in axiale Richtung gegenüberliegenden, Außenseiten, besonders bevorzugt in der Mitte zwischen den zwei in axiale Richtung gegenüberliegenden Außenseiten, des Bauteils angeordnet werden.

Die oben genannte Aufgabe wird gemäß einem vierten Aspekt der Erfindung durch eine Verwendung eines erfindungsgemäßen Sprengrings zur Sicherung eines Bauteils auf einer Welle oder eines erfindungsgemäßen Systems zur Sicherung eines Bauteils auf einer Welle gelöst.

Weitere Aufgaben, Merkmale, Vorteile und Aspekte der vorliegenden Erfindung werden für den Fachmann aus der folgenden Beschreibung und den beigefügten Ansprüchen ersichtlich. Es sollte jedoch verstanden werden, dass die folgende Beschreibung, die beigefügten Ansprüche und die spezifischen Beispiele, die bevorzugte Ausführungsformen der Anwendung zeigen, nur zur Veranschaulichung gegeben werden. Verschiedene Änderungen und Modifikationen im Rahmen des Geistes und des Umfangs der offengelegten Erfindung werden dem Fachmann beim Lesen der folgenden Ausführungen ohne weiteres einleuchten.

### DEFINITIONEN

Die folgenden Ausdrücke haben im Allgemeinen vorzugsweise die nachstehend aufgeführten Bedeutungen, sofern sich aus dem Kontext, in dem sie verwendet werden, nichts anderes ergibt.

Der hier verwendete Ausdruck "umfassen" schließt neben seiner wörtlichen Bedeutung auch die Ausdrücke "im Wesentlichen bestehen aus" und "bestehen aus" ein und bezieht sich speziell auf diese. Somit bezieht sich der Ausdruck "umfassen" sowohl auf Ausführungsformen, bei denen der Gegenstand, der speziell aufgeführte Elemente "umfasst", keine weiteren Elemente umfasst, als auch auf Ausführungsformen, bei denen der Gegenstand, der speziell aufgeführte Elemente "umfasst", weitere Elemente umfassen kann und/oder tatsächlich umfasst. Ebenso ist der Ausdruck "haben" als der Ausdruck "umfassen" zu verstehen, der auch die Ausdrücke "im Wesentlichen bestehen aus" und "bestehen aus" einschließt und sich auf diese bezieht. Der Ausdruck "bestehen im Wesentlichen aus" bezieht sich, soweit möglich, insbesondere auf Ausführungsformen, bei denen der Gegenstand neben den spezifisch aufgeführten Elementen, aus denen der Gegenstand im Wesentlichen besteht, 20 % oder weniger, insbesondere 15 % oder weniger, 10 % oder weniger oder insbesondere 5 % oder weniger weitere Elemente umfasst.

### FIGUREN

Fig. 1 isometrische Ansicht eines Sprengrings;
Fig. 2 isometrische Ansicht eines Sicherungsrings;
Fig. 3 Querschnitt eines Sprengrings;
Fig. 4 Querschnitt eines Sprengrings;
Fig. 5 Querschnitt eines Sprengrings;
Fig. 6 Querschnitt eines Sprengrings;
Fig. 7 Querschnitt einer Welle;
Fig. 8 Ansicht eines Sprengrings;
Fig. 9 Querschnitt eines Systems;
Fig. 10 einen Ausschnitt der Fig. 9;
Fig. 11 Querschnitt eines Systems;
Fig. 12 Querschnitt eines Systems;
Fig. 13 Querschnitt eines Systems;
Fig. 14 Querschnitt eines Systems.

### SPEZIELLE BESCHREIBUNG

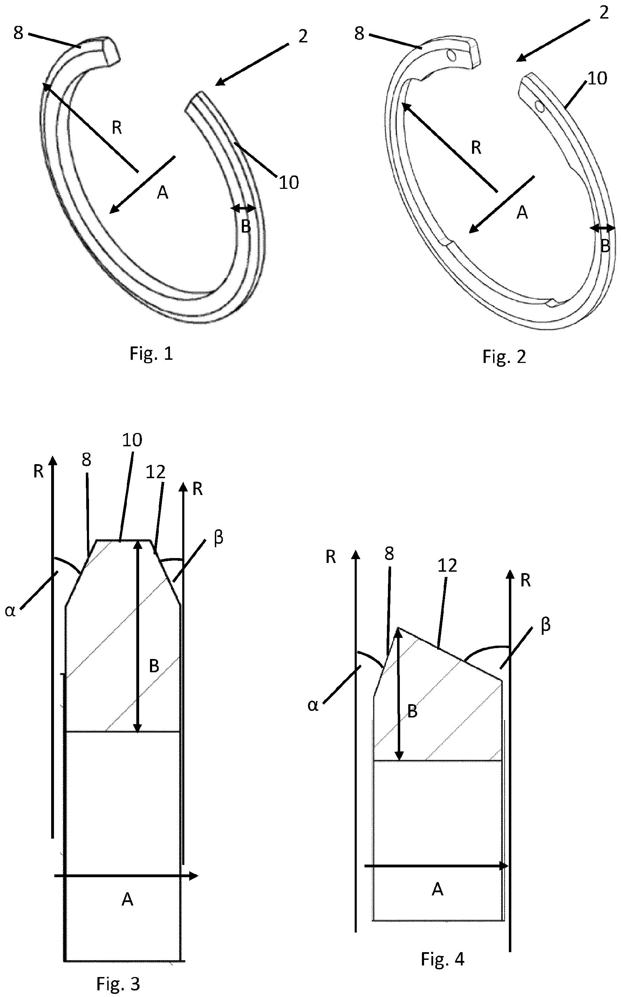

Fig. 1 zeigt eine isometrische Ansicht eines Sprengrings 2 zur Sicherung eines Bauteils 4 auf einer Welle 6. Der Sprengring 2 umfasst eine Sicherungsfläche 8 für den Kontakt des Sprengrings 2 mit dem Bauteil 4. Die Sicherungsfläche 8 verläuft zumindest teilweise in einem Winkel größer als 0° zur radialen Richtung R des Sprengrings 2.

Ferner sind in dem Sprengring 2 die Breite des Sprengrings, die radiale Richtung R und die axiale Richtung A eingezeichnet.

Fig. 2 zeigt eine isometrische Ansicht eines Sicherungsrings 2 zur Sicherung eines Bauteils 4 auf einer Welle 6. Der Sicherungsring 2 umfasst eine Sicherungsfläche 8 für den Kontakt des Sicherungsrings 2 mit dem Bauteil 4. Die Sicherungsfläche 8 verläuft zumindest teilweise in einem Winkel größer als 0° zur radialen Richtung R des Sicherungsrings 2.

Ferner sind in dem Sicherungsring 2 die Breite des Sicherungsrings, die radiale Richtung R und die axiale Richtung A eingezeichnet.

Fig. 3 zeigt einen Querschnitt eines Sprengrings 2 zur Sicherung eines Bauteils 4 auf einer Welle 6. Der Sprengring 2 umfasst eine Sicherungsfläche 8 für den Kontakt des Sprengrings 2 mit dem Bauteil 4. Die Sicherungsfläche 8 verläuft teilweise in einem Winkel größer als 0° zur radialen Richtung R des Sprengrings 2.

Die Sicherungsfläche 8 ist eben. Die ebene Sicherungsfläche 8 verläuft in einem Winkel α kleiner gleich 10° zur radialen Richtung R des Sprengrings 2. Die Sicherungsfläche 8 erstreckt sich über maximal 30% der Breite B des Sprengrings 2.

Der Sprengring 2 umfasst eine Außenfläche 10. Die Außenfläche 10 verläuft in einem Winkel von maximal 3° zur axialen Richtung A des Sprengrings 2. Die Sicherungsfläche 8 ist mit der Außenfläche 10 verbunden.

Der Sprengring 2 umfasst eine Kontaktfläche 12. Die Kontaktfläche 12 ist der Sicherungsfläche 8 in axiale Richtung gegenüberliegend angeordnet. Die Kontaktfläche 12 weist denselben Winkel β zur radialen Richtung R des Sprengrings 2 auf wie die Sicherungsfläche 8. Die Sicherungsfläche 8 und die Kontaktfläche 12 sind mit der Außenfläche 10 verbunden.

Fig. 4 zeigt einen Querschnitt eines Sprengrings 2 zur Sicherung eines Bauteils 4 auf einer Welle 6. Der Sprengring 2 umfasst eine Sicherungsfläche 8 für den Kontakt des Sprengrings 2 mit dem Bauteil 4. Die Sicherungsfläche 8 verläuft teilweise in einem Winkel größer als 0° zur radialen Richtung R des Sprengrings 2.

Die Sicherungsfläche 8 ist eben. Die ebene Sicherungsfläche 8 verläuft in einem Winkel α kleiner gleich 10° zur radialen Richtung R des Sprengrings 2. Die Sicherungsfläche 8 erstreckt sich über maximal 50% der Breite B des Sprengrings 2.

Der Sprengring 2 umfasst eine Kontaktfläche 12. Die Kontaktfläche 12 ist der Sicherungsfläche 8 in axiale Richtung gegenüberliegend angeordnet. Die Kontaktfläche 12 weist einen größeren Winkel β zur radialen Richtung R des Sprengrings 2 auf wie die Sicherungsfläche 8. Die Sicherungsfläche 8 und die Kontaktfläche 12 sind miteinander verbunden.

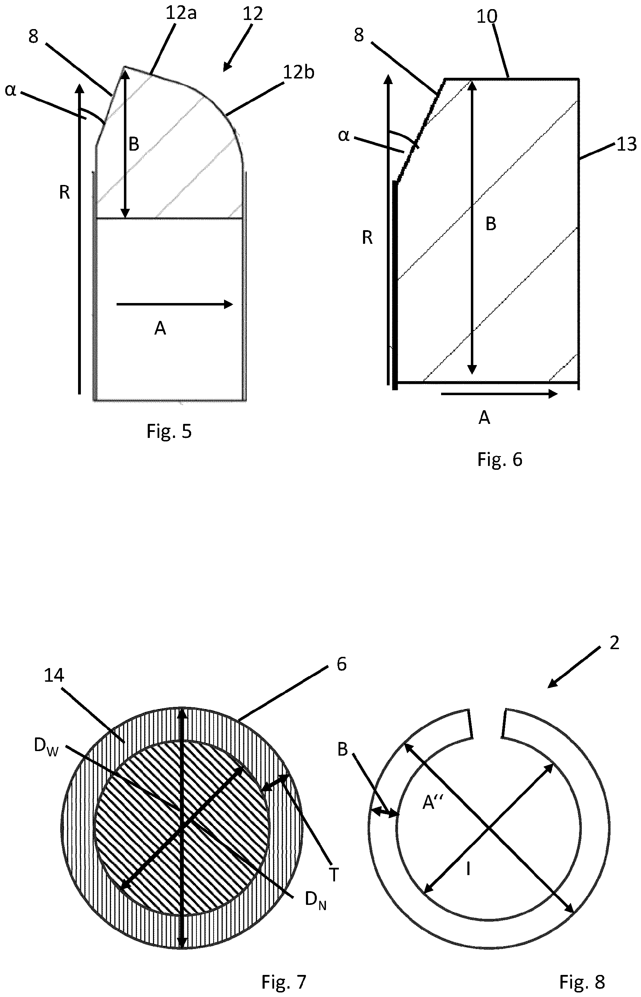

Fig. 5 zeigt einen Querschnitt eines Sprengrings 2 zur Sicherung eines Bauteils 4 auf einer Welle 6. Der Sprengring 2 umfasst eine Sicherungsfläche 8 für den Kontakt des Sprengrings 2 mit dem Bauteil 4. Die Sicherungsfläche 8 verläuft teilweise in einem Winkel α größer als 0° zur radialen Richtung R des Sprengrings 2.

Die Sicherungsfläche 8 ist eben. Die ebene Sicherungsfläche 8 verläuft in einem Winkel α kleiner gleich 10° zur radialen Richtung R des Sprengrings 2. Die Sicherungsfläche 8 erstreckt sich über maximal 50% der Breite B des Sprengrings 2.

Der Sprengring 2 umfasst eine Kontaktfläche 12. Die Kontaktfläche 12 ist der Sicherungsfläche 8 in axiale Richtung gegenüberliegend angeordnet. Die Kontaktfläche 12 weist einen ebenen Teil 12a und einen konvexen Teil 12b auf. Der ebene Teil 12a der Kontaktfläche 12 ist in axiale Richtung näher zu der Sicherungsfläche 8 angeordnet als der konvexe Teil 12b. Die Sicherungsfläche 8 und die Kontaktfläche 12 sind miteinander verbunden.

Fig. 6 zeigt einen Querschnitt eines Sprengrings 2 zur Sicherung eines Bauteils 4 auf einer Welle 6. Der Sprengring 2 umfasst eine Sicherungsfläche 8 für den Kontakt des Sprengrings 2 mit dem Bauteil 4. Die Sicherungsfläche 8 verläuft teilweise in einem Winkel größer als 0° zur radialen Richtung R des Sprengrings 2.

Die Sicherungsfläche 8 ist eben. Die ebene Sicherungsfläche 8 verläuft in einem Winkel α kleiner gleich 10° zur radialen Richtung R des Sprengrings 2. Die Sicherungsfläche 8 erstreckt sich über maximal 50% der Breite B des Sprengrings 2.

Der Sprengring 2 weist eine radial verlaufende Fläche 13 auf, die der Sicherungsfläche 8 in axiale Richtung A gegenüberliegend angeordnet ist.

Fig. 7 zeigt einen Querschnitt einer Welle 6. In der Fig. 7 ist die Welle 6 und die Nut 14 zu erkennen. Ferner ist der Durchmesser D_{N} der Nut 14, der Durchmesser D_{W} der Welle 6 und die Tiefe T der Nut 14 eingezeichnet.

Fig. 8 zeigt eine Ansicht eines Sprengrings 2. In der Fig. 7 ist der Innendurchmesser I des Sprengrings 2 im entspannten Zustand, der Außendurchmesser A" des Sprengrings 2 im entspannten Zustand und die Breite B des Sprengrings 2 eingezeichnet. Der Außendurchmesser A" des Sprengrings 2 im entspannten Zustand ist größer als der Außendurchmesser A` des Sprengrings 2 im montierten Zustand. Der Außendurchmesser A` des Sprengrings 2 im montierten Zustand ist größer als der Außendurchmesser A` des Sprengrings 2 im verkleinerten Zustand.

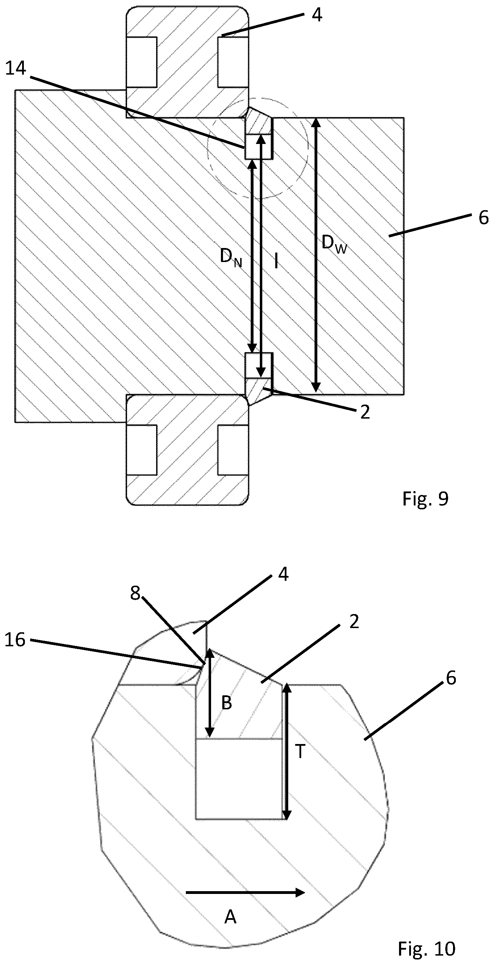

Fig. 9 zeigt einen Querschnitt eines Systems zur Sicherung eines Bauteils 4 auf einer Welle 6. Das System umfasst ein Bauteil 4, eine Welle 6 und einen erfindungsgemäßen Sprengring 2. Die Welle 6 umfasst eine Nut 14, wobei der Sprengring 2 in der Nut 14 angeordnet ist.

Die Fig. 10 ist eine Ausschnitt der Fig. 9. Wie in Fig. 10 zu sehen, weist das Bauteil 4 eine Anlagefläche 16 auf. Die Anlagefläche 16 ist an der Sicherungsfläche 8 angeordnet, sodass das Bauteil 4 in axiale Richtung A gesichert ist.

Wie in Fig. 9 gezeigt ist der Durchmesser D_{N} der Nut 14 kleiner als der Innendurchmesser I des Sprengrings 2 im entspannten Zustand. Der Durchmesser Dw der Welle 6 ist größer als der Außendurchmesser A des Sprengrings 2 im verkleinerten Zustand. Ferner ist der Außendurchmesser A` des Sprengrings 2 im montierten Zustand kleiner als der Außendurchmesser A" des Sprengrings 2 im entspannten Zustand.

Wie in Fig. 10 gezeigt ist die Tiefe T der Nut 14 größer als die Breite B des Sprengrings 2.

Die Anlagefläche 16 ist gebogen ausgebildet. Die Sicherungsfläche 8 ist eben. Alternativ könnten die Anlagefläche 16 auch eben sein. Die Anlagefläche 16 ist eine Ecke des Bauteils 4.

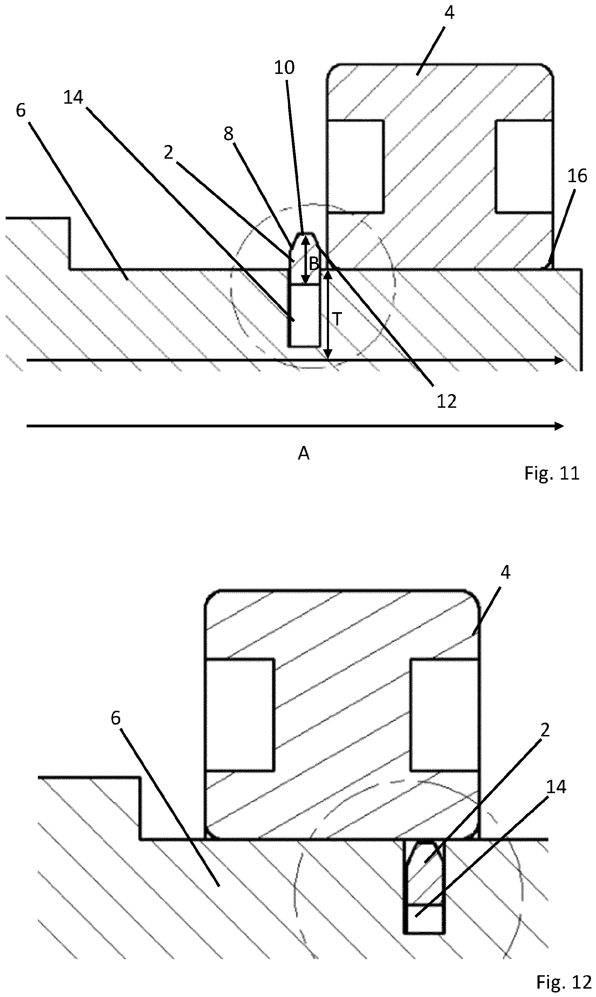

Anhand der Fig. 11 bis 13 wird das Verfahren zur Sicherung eines Bauteils 4 auf einer Welle 6 beschrieben. Dabei zeigen die Fig. 11 bis 13 einen Querschnitt eines Systems zur Sicherung eines Bauteils 4 auf einer Welle 6 zu verschiedenen Zeitpunkten des Verfahrens.

Fig. 11 zeigt einen Querschnitt eines Systems zur Sicherung eines Bauteils 4 auf einer Welle 6. Das System umfasst ein Bauteil 4, eine Welle 6 und einen erfindungsgemäßen Sprengring 2. Die Welle 6 umfasst eine Nut 14, wobei der Sprengring 2 in der Nut 14 angeordnet ist. Das Bauteil 4 weist eine Anlagefläche 16 auf.

Der Durchmesser D_{N} der Nut 14 ist kleiner als der Innendurchmesser I des Sprengrings 2 im entspannten Zustand. Der Durchmesser Dw der Welle 6 ist größer als der Außendurchmesser A des Sprengrings 2 im verkleinerten Zustand. Ferner ist der Außendurchmesser A` des Sprengrings 2 im montierten Zustand kleiner als der Außendurchmesser A" des Sprengrings 2 im entspannten Zustand ist. Die Tiefe T der Nut 14 ist größer als die Breite B des Sprengrings 2.

Die Sicherungsfläche 8 ist eben. Die Anlagefläche 16 ist konvex. Die Anlagefläche 16 ist an der der Welle 6 zugewandten Außenseite des Bauteils 4 ausgebildet.

Wie in Fig. 11 zu sehen, wird der Sprengring 2 in der Nut 14 angeordnet. Anschließend wird der Außendurchmesser A des Sprengrings 2 durch eine Krafteinwirkung verkleinert, bis der Außendurchmesser A" des Sprengrings 2 kleiner als der Durchmesser Dw der Welle 6 ist. Zudem wird das Bauteil 4 auf der Welle 6 angeordnet.

Wie in Fig. 12 zu sehen, wird das Bauteil 4 entlang der Welle 6 über die Nut 14 geschoben. Dabei wird das Bauteil 4 vollständig über der Nut 14 angeordnet. Alternativ könnte das Bauteil 4 teilweise über der Nut 14 angeordnet sein.

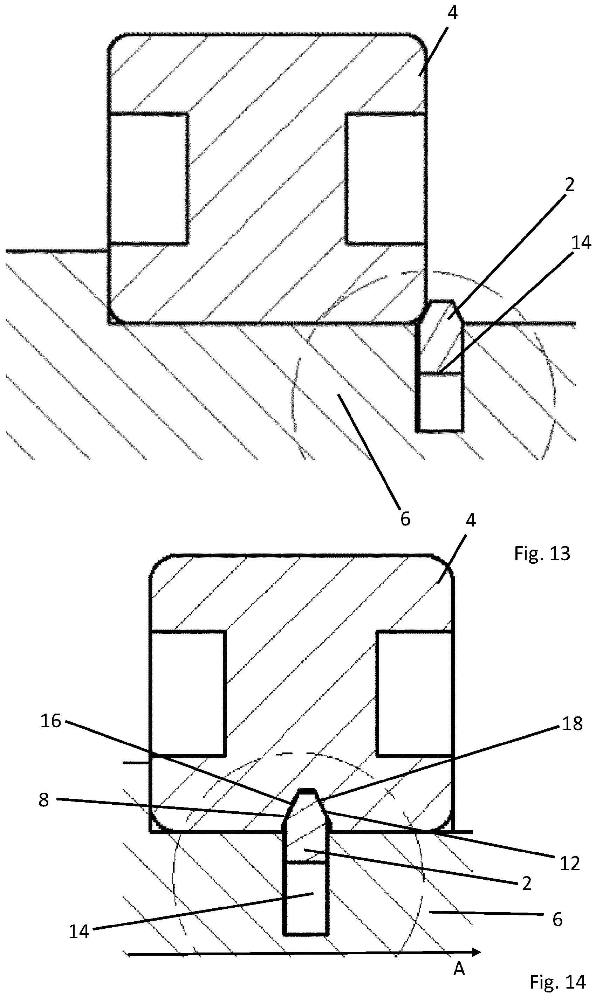

Wie in Fig. 13 zu sehen, wird das Bauteil 4 teilweise über der Nut 14 angeordnet. Anschließend wird die Krafteinwirkung auf den Sprengrings 2 eingestellt. Abschließend wird die Sicherungsfläche 8 an der Anlagefläche 16 angeordnet, um das Bauteil 4 auf der Welle 6 zu sichern.

Fig. 14 zeigt einen Querschnitt eines Systems zur Sicherung eines Bauteils 4 auf einer Welle 6. Das System umfasst ein Bauteil 4, eine Welle 6 und einen erfindungsgemäßen Sprengring 2. Die Welle 6 umfasst eine Nut 14, wobei der Sprengring 2 in der Nut 14 angeordnet ist.

Wie in Fig. 14 zu sehen, weist das Bauteil 4 eine Anlagefläche 16 auf. Die Anlagefläche 16 ist an der Sicherungsfläche 8 angeordnet, sodass das Bauteil 4 in axiale Richtung A gesichert ist. Die Anlagefläche 16 ist gebogen ausgebildet. Die Sicherungsfläche 8 ist eben.

Der Sprengring 2 umfasst eine Kontaktfläche 12. Die Kontaktfläche 12 ist der Sicherungsfläche 8 in axiale Richtung gegenüberliegend angeordnet. Das Bauteil 4 weist eine weitere Anlagefläche 18 auf. Die weitere Anlagefläche 18 ist an der der Welle 6 zugewandten Außenseite des Bauteils 4 ausgebildet, wobei die Anlagefläche 16 der weiteren Anlagefläche 18 in axiale Richtung A gegenüberliegend angeordnet ist. Die Kontaktfläche 12 liegt an der weiteren Anlagefläche 18 an.

## Patentansprüche

1. Sprengring (2) zur Sicherung eines Bauteils (4) auf einer Welle (6),
wobei der Sprengring (2) eine Sicherungsfläche (8) für den Kontakt des Sprengrings (2) mit dem Bauteil (4) umfasst,
wobei die Sicherungsfläche (8) zumindest teilweise in einem Winkel größer als 0° zur radialen Richtung (R) des Sprengrings (2) verläuft.

2. Sprengring nach Anspruch 1,
**dadurch gekennzeichnet, dass**
die Sicherungsfläche (8) eben ist.

3. Sprengring nach Anspruch 1 oder 2,
**dadurch gekennzeichnet, dass**
die ebene Sicherungsfläche (8) zumindest teilweise in einem Winkel kleiner gleich 20°, bevorzugt kleiner gleich 15°, bevorzugt kleiner gleich 10°, zur radialen Richtung (R) des Sprengrings (2) verläuft.

4. Sprengring nach einem der Ansprüche 1 bis 3,
**dadurch gekennzeichnet, dass**
sich die Sicherungsfläche (8) über maximal 80%, bevorzugt über maximal 60%, besonders bevorzugt über maximal 50%, der Breite (B) des Sprengrings (2) erstreckt.

5. Sprengring nach einem der Ansprüche 1 bis 4,
**dadurch gekennzeichnet, dass**
der Sprengring (2) eine Außenfläche (10) umfasst,
wobei die Außenfläche (10) in einem Winkel von maximal 10°, bevorzugt maximal 5°, besonders bevorzugt maximal 3°, zur axialen Richtung (A) des Sprengrings (2) verläuft,
wobei die Sicherungsfläche (8) mit der Außenfläche (10) verbunden ist.

6. Sprengring nach einem der Ansprüche 1 bis 5,
**dadurch gekennzeichnet, dass**
der Sprengring (2) eine Kontaktfläche (12) umfasst,
wobei die Kontaktfläche (12) der Sicherungsfläche (8) in axiale Richtung gegenüberliegend angeordnet ist,
a) wobei insbesondere die Kontaktfläche (12) einen größeren Winkel zur radialen Richtung (R) des Sprengrings (2) aufweist als die Sicherungsfläche (8), oder
b) wobei insbesondere die Kontaktfläche (12) denselben Winkel zur radialen Richtung (R) des Sprengrings (2) aufweist wie die Sicherungsfläche (8).

7. System zur Sicherung eines Bauteils (4) auf einer Welle (6),
wobei das System ein Bauteil (4), eine Welle (6) und einen Sprengrings (2) nach einem der Ansprüche 1 bis 6 umfasst,
wobei die Welle (6) eine Nut (14) umfasst,
wobei der Sprengring (2) in der Nut (14) angeordnet ist,
wobei das Bauteil (4) eine Anlagefläche (16) aufweist,
wobei die Anlagefläche (16) an der Sicherungsfläche (8) angeordnet ist, sodass das Bauteil (4) in axiale Richtung (A) gesichert ist.

8. System nach Anspruch 7,
**dadurch gekennzeichnet, dass**
der Durchmesser (D_{N}) der Nut (14) kleiner ist als der Innendurchmesser (I) des Sprengrings (2) im entspannten Zustand, und/oder
wobei der Durchmesser (Dw) der Welle (6) größer als der Außendurchmesser (A) des Sprengrings (2) im verkleinerten Zustand ist.

9. System nach Anspruch 7 oder 8,
**dadurch gekennzeichnet, dass**
der Außendurchmesser (A`) des Sprengrings (2) im montierten Zustand kleiner als der Außendurchmesser (A") des Sprengrings (2) im entspannten Zustand ist.

10. System nach Anspruch nach einem der Ansprüche 7 bis 9,
**dadurch gekennzeichnet, dass**
die Tiefe (T) der Nut (14) größer ist als die Breite (B) des Sprengrings (2).

11. System nach Anspruch nach einem der Ansprüche 7 bis 10,
**dadurch gekennzeichnet, dass**
die Anlagefläche (16) als Gegenstück zur Sicherungsfläche (8) ausgebildet ist,
wobei insbesondere die Anlagefläche (16) eben oder gebogen, insbesondere konvex, ist.

12. System nach Anspruch nach einem der Ansprüche 7 bis 11,
**dadurch gekennzeichnet, dass**
die Anlagefläche (16) eine Ecke des Bauteils (4) ist.

13. System nach Anspruch nach einem der Ansprüche 7 bis 11,
**dadurch gekennzeichnet, dass**
die Anlagefläche (16) an der der Welle (6) zugewandten Außenseite des Bauteils (4) ausgebildet ist.

14. System nach Anspruch 13,
**dadurch gekennzeichnet, dass**
das Bauteil (4) eine weitere Anlagefläche (18) aufweist,
wobei die weitere Anlagefläche (18) an der der Welle (6) zugewandten Außenseite des Bauteils (4) ausgebildet ist,
wobei die Anlagefläche (16) der weiteren Anlagefläche (18) in axiale Richtung (A) gegenüberliegend angeordnet ist,
wobei die Kontaktfläche (12) an der weiteren Anlagefläche (18) anliegt.

15. Verfahren zur Sicherung eines Bauteils (4) auf einer Welle (6) mit einem System nach einem der Ansprüche 7 bis 14,
• bei dem der Sprengring (2) in der Nut (14) angeordnet wird,
• bei dem der Außendurchmesser (A) des Sprengrings (2) durch eine Krafteinwirkung verkleinert wird, bis der Außendurchmesser (A) des Sprengrings (2) kleiner als der Durchmesser (Dw) der Welle (6) ist,
• bei dem das Bauteil (4) auf der Welle (6) angeordnet wird,
• bei dem das Bauteil (4) zumindest teilweise oder vollständig über der Nut (14) angeordnet wird,
• bei dem die Krafteinwirkung auf den Sprengrings (2) eingestellt wird,
• bei dem die Sicherungsfläche (8) an der Anlagefläche (16) angeordnet wird, um das Bauteil (4) auf der Welle (6) zu sichern.
